# EUROPEAN PATENT SPECIFICATION

(11) **EP 4 080 644 B1**
(45) Date of publication and mention of the grant of the patent: **26.11.2025**
(21) Application number: 21854633.1
(22) Date of filing: 23.07.2021
(51) Int. Cl.: H01M 10/42, H01M 50/572, H01M 50/531, H01M 10/04

(54) **ELECTRODE ASSEMBLY INCLUDING DISCONNECTION PREVENTING LAYER AND METHOD FOR MANUFACTURING THE SAME**
ELEKTRODENANORDNUNG MIT EINER SCHICHT ZUR VERHINDERUNG VON VERBINDUNGSABBRÜCHENUND VERFAHREN ZU DEREN HERSTELLUNG
ENSEMBLE D'ÉLECTRODES COMPRENANT UNE COUCHE ANTI-DÉCONNEXION ET SON PROCÉDÉ DE FABRICATION

(30) Priority: 03.08.2020 KR 20200096593
(43) Date of publication of application: 26.10.2022
(73) Proprietor: LG Energy Solution, Ltd., Seoul 07335 (KR)
(72) Inventor: SON, Ju Nam, Daejeon 34122 (KR); KIM, Jin Soo, Daejeon 34122 (KR); KIM, Su Deok, Daejeon 34122 (KR); LEE, Seung Su, Daejeon 34122 (KR); KIM, Min Geun, Daejeon 34122 (KR); JU, Jeong Hun, Daejeon 34122 (KR)
(74) Representative: Hoffmann Eitle
(86) International application number: PCT/KR2021/009583
(87) International publication number: WO 2022/030839

(56) References cited:
- CN-A- 101 916 841
- KR-A- 20040 059 303
- KR-A- 20070 096 882
- KR-A- 20090 132 500
- KR-A- 20180 062 849
- KR-B1- 101 741 302
- US-A1- 2009 280 406

## Description

### [Technical Field]

This application claims the benefit of priority based on Korean Patent Application No. 10-2020-0096593, filed on August 3, 2020.

The present invention relates to an electrode assembly including a disconnection preventing layer and a method of manufacturing the same, and more particularly, to an electrode assembly including a disconnection preventing layer formed by horizontally bending an extended negative electrode current collector, and a method of manufacturing the same.

### [Background Art]

Recently, secondary batteries capable of charging and discharging have been widely used as energy sources of wireless mobile devices. In addition, the secondary battery has attracted attention as an energy source of an electric vehicle, a hybrid electric vehicle, etc., which are proposed as a solution for air pollution of existing gasoline vehicles and diesel vehicles using fossil fuel. Therefore, the types of applications using the secondary battery are currently much diversified due to the advantages of the secondary battery, and it is expected that the secondary battery will be applied to many fields and products in the future.

Such secondary batteries may be classified into lithium ion batteries, lithium ion polymer batteries, lithium polymer batteries, etc., depending on the composition of the electrode and the electrolyte, and among them, the amount of use of lithium-ion polymer batteries that are less likely to leak electrolyte and are easy to manufacture is on the increase. In general, secondary batteries are classified into cylindrical batteries and prismatic batteries in which an electrode assembly is embedded in a cylindrical or rectangular metal can, depending on the shape of a battery case, and pouch-type batteries in which the electrode assembly is embedded in a pouch-type case of an aluminum laminate sheet. The electrode assembly built into the battery case is composed of a positive electrode, a negative electrode, and a separator interposed between the positive electrode and the negative electrode, and is a power generating element capable of charging and discharging. The electrode assembly is classified into a jelly-roll type wound with a separator interposed between the positive electrode and the negative electrode which are long sheet-shaped and are coated with active materials, and a stack type in which a plurality of positive electrodes and negative electrodes of a predetermined size are sequentially stacked while a separator is interposed therebetween.

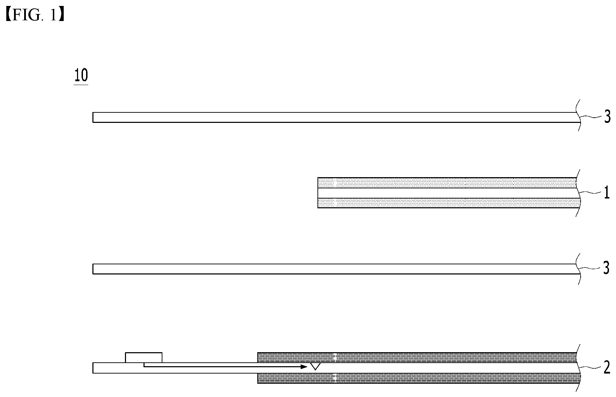

FIG. 1 is a cross-sectional view showing a lamination structure of a conventional electrode assembly and a state in which a disconnection has occurred in a negative electrode current collector.

Referring to FIG. 1, a conventional electrode assembly 10 has a structure in which a separator 3 is interposed between a positive electrode 1 and a negative electrode 2.

Meanwhile, when a secondary battery including such an electrode assembly is repeatedly charged/discharged, the positive electrode and the negative electrode in the electrode assembly are repeatedly shrunk and expanded. In particular, in a general electrode assembly, the length of the positive electrode may be set to be smaller than that of the negative electrode. In this case, as the positive electrode is repeatedly shrunk and expanded, the negative electrode facing the positive electrode having the separator therebetween repeatedly receives stress. When fatigue by such a stress is accumulated, a disconnection by a crack may occur at a negative electrode current collector portion facing the end of the positive electrode as shown in FIG. 1. In this case, as the flow of the current toward the negative electrode tab in the current collector is interrupted, a normal operation of the battery is interrupted. In particular, in the case of a cylindrical battery, there may be a case that a non-coated part may not be formed at the edge portion of the positive electrode (that is, a free edge type). In this case, since the edge portion of the positive electrode is thick, a probability that a crack is generated in the negative electrode increases.

Meanwhile, Korean Patent No. 10-1629498 discloses that an edge protecting tape may be attached on the end of the positive electrode active material layer in order to prevent generation of a short circuit at the inside of the battery due to stress by a step difference. In this case, if a disconnection occurs in the negative electrode current collector by the volume change of the positive electrode, the current flow in the negative electrode may be interrupted.

Therefore, there is a need for technology development for solving the problem.

US 2009/280406 A1 relates to a secondary battery devised to achieve a high power, and in particular, to a current collecting structure having a low resistance suitable for charging and discharging a large electric current.

CN 101 916 841 A relates to a laminate type battery. With regard to fig. 1, negative pole (electrode) 10 has negative electrode collector 8 and is formed on the surface of negative electrode collector 8 and comprises the anode active material layer 9 of negative active core-shell material. Positive pole 6, dielectric substrate 7 and negative pole 10 are stacked in order. In addition, dielectric substrate 7 has and is suitable for keeping the barrier film of electrolyte and remains on electrolyte in the barrier film.

### [Disclosure]

### [Technical Problem]

The present invention has been devised to solve the problems, and an object of the present invention is to provide an electrode assembly capable of preventing performance deterioration of a battery by maintaining electric connection in a negative electrode even in the case that a fatigue failure occurs in a negative electrode due to a change in volume by shrinkage and expansion of a positive electrode, and a method of manufacturing the same.

### [Technical Solution]

In view of the above, the present disclosure proposes an electrode assembly as defined by claim 1.

An electrode assembly according to an embodiment of the present invention includes: a positive electrode; a negative electrode; and a separator interposed between the positive electrode and the negative electrode, wherein the positive electrode includes a positive electrode active material layer formed on a positive electrode current collector, and the negative electrode includes a negative electrode active material layer formed on a negative electrode current collector, wherein a non-coated part is formed at an edge of the negative electrode current collector, and wherein a disconnection preventing layer is formed as the negative electrode current collector, which is extended to an external side of the non-coated part, is horizontally bent.

In addition, the present invention provides a secondary battery including the above described electrode assembly.

Further, the present invention provides a method of manufacturing an electrode assembly as described above. The method includes: a step of cutting a negative electrode current collector to have a portion which is extended by a predetermined length; a step of forming a negative electrode active material layer on a portion except the portion extended by a predetermined length and the non-coated part; a step of forming a disconnection preventing layer by horizontally bending the portion extended by the predetermined length; and a step of fixing the disconnection preventing layer and the current collector by welding an opposite end of the horizontally bent portion.

### [Advantageous Effects]

According to an electrode assembly of the present invention, by forming a disconnection preventing layer on one surface of a non-coated part by horizontally bending a negative electrode current collector which has been extended to an external side of the non-coated part, it is possible to prevent performance deterioration of a battery by maintaining electric connection in a negative electrode through the disconnection preventing layer even when disconnection occurs at a portion facing the positive electrode edge of the negative electrode current collector due to the volume expansion of the positive electrode.

### [Brief Description of the Drawings]

FIG. 1 is a cross-sectional view showing a lamination structure of a conventional electrode assembly and a state in which a disconnection has occurred in a negative electrode current collector.
FIG. 2 is a cross-sectional view illustrating a laminated structure of an electrode assembly according to an embodiment of the present invention.
FIG. 3 is a cross-sectional view illustrating a state in which a disconnection has occurred in an electrode assembly according to an embodiment of the present invention.
FIG. 4 is a cross-sectional view illustrating a laminated structure of an electrode assembly according to another embodiment of the present invention.
FIG. 5 is a schematic diagram illustrating a structure of a battery including an electrode assembly according to an embodiment of the present invention.
FIG. 6 is a flowchart illustrating the order of the method of manufacturing an electrode assembly according to the present invention.
FIG. 7 is a schematic diagram showing a manufacturing process of a negative electrode in a method for manufacturing an electrode assembly according to the present invention.

### [Detailed Description of the Preferred Embodiments]

An electrode assembly according to an embodiment of the present invention includes: a positive electrode; a negative electrode; and a separator interposed between the positive electrode and the negative electrode, wherein the positive electrode includes a positive electrode active material layer formed on a positive electrode current collector, and the negative electrode includes a negative electrode active material layer formed on a negative electrode current collector, wherein a non-coated part is formed at an edge of the negative electrode current collector, and wherein a disconnection preventing layer is formed as the negative electrode current collector, which is extended to an external side of the non-coated part, is horizontally bent.

In an embodiment of the present invention, a negative electrode tab is formed on another surface of the non-coated part where the disconnection preventing layer is formed thereon.

In one embodiment of the present invention, a welded portion for connecting the disconnection preventing layer with the non-coated part is formed on an opposite end of the horizontally bent portion.

In one embodiment of the present invention, the negative electrode active material layer includes a first negative electrode active material layer facing the positive electrode having a separator therebetween, and a second negative electrode active material layer formed on an opposite surface of a surface where the first negative electrode active material layer is formed.

In a specific example, a length of the first negative electrode active material layer is greater than that of the second negative electrode active material layer.

In a specific example, a distance between an end of the first negative electrode active material layer and an end of the electrode assembly is smaller than a distance between an end of the positive electrode active material layer and the end of the electrode assembly, and a distance between an end of the second negative electrode active material layer and the end of the electrode assembly is greater than a distance between the end of the positive electrode active material layer and the end of the electrode assembly.

In a specific example, the disconnection preventing layer is formed on a surface where the second negative electrode active material layer is formed, and the disconnection preventing layer is spaced apart from the second negative electrode active material layer by a predetermined distance.

In a specific example, a distance between the welded portion and the end of the electrode assembly is greater than the end of the positive electrode active material layer and the end of the electrode assembly.

In a specific example, the electrode assembly according to the present invention further includes a bonding portion formed between the non-coated part and the disconnection preventing layer.

In a specific example, the positive electrode, the negative electrode, and the separator are wound in a jelly-roll shape after being laminated.

In addition, the present invention provides a secondary battery including the above described electrode assembly.

Further, the present invention provides a method of manufacturing an electrode assembly as described above. The method includes: a step of cutting a negative electrode current collector to have a portion which is extended by a predetermined length; a step of forming a negative electrode active material layer on a portion except the portion extended by a predetermined length and the non-coated part; a step of forming a disconnection preventing layer by horizontally bending the portion extended by the predetermined length; and a step of fixing the disconnection preventing layer and the current collector by welding an opposite end of the horizontally bent portion.

### [Detailed Description of the Preferred Embodiments]

Hereinafter, the present invention will be described in detail with reference to the drawings. The terms and words used in the present specification and claims should not be construed as limited to ordinary or dictionary terms and the inventor may properly define the concept of the terms in order to best describe its invention. The terms and words should be construed as meaning and concept consistent with the technical idea of the present invention.

In this application, it should be understood that terms such as "include" or "have" are intended to indicate that there is a feature, number, step, operation, component, part, or a combination thereof described on the specification, and they do not exclude in advance the possibility of the presence or addition of one or more other features or numbers, steps, operations, components, parts or combinations thereof. Also, when a portion such as a layer, a film, an area, a plate, etc. is referred to as being "on" another portion, this includes not only the case where the portion is "directly on" the another portion but also the case where further another portion is interposed therebetween. On the other hand, when a portion such as a layer, a film, an area, a plate, etc. is referred to as being "under" another portion, this includes not only the case where the portion is "directly under" the another portion but also the case where further another portion is interposed therebetween. In addition, to be disposed "on" in the present application may include the case disposed at the bottom as well as the top.

Hereinafter, the present invention will be described in detail with reference to the drawings.

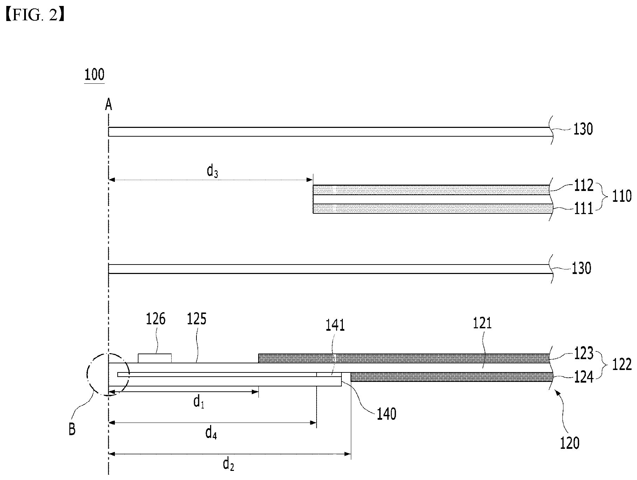

FIG. 2 is a cross-sectional view illustrating a laminated structure of an electrode assembly according to an embodiment of the present invention.

Referring to FIG. 2, an electrode assembly 100 according to an embodiment of the present invention includes a positive electrode 100; a negative electrode 120; and a separator 130 interposed between the positive electrode 110 and the negative electrode 120. Herein, the positive electrode 110 includes a positive electrode active material layer 112 formed on a positive electrode current collector 111, and the negative electrode 120 includes a negative electrode active material layer 122 formed on a negative electrode current collector 121, a non-coated part 125 is formed at an edge of the negative electrode current collector 121, and a disconnection preventing layer 140 is formed as the negative electrode current collector 121, which is extended to an external side of the non-coated part 125, is horizontally bent. Namely, in the present invention, the disconnection preventing layer 140 means a metal layer which is formed on one surface of the non-coated part 125 as a part of the negative electrode current collector 121.

As described above, in the case that the secondary battery including a such an electrode assembly is repeatedly charged and discharged, as the positive electrode repeatedly shrunk and expanded, the negative electrode facing the positive electrode having the separator therebetween repeatedly receives stress. When fatigue by such a stress is accumulated, a disconnection by a crack may occur at a negative electrode current collector portion facing the end of the positive electrode as shown in FIG. 1. **In** this case, as the flow of the current toward the negative electrode tab in the current collector is interrupted, a normal operation of the battery is interrupted.

As such, according to an electrode assembly of the present invention, by forming a disconnection preventing layer on one surface of a non-coated part by horizontally bending a negative electrode current collector which has been extended to an external side of the non-coated part, it is possible to prevent performance deterioration of a battery by maintaining electric connection in a negative electrode through the disconnection preventing layer even when disconnection occurs at the negative electrode current collector due to the volume expansion of the positive electrode.

Hereinafter, the configuration of the electrode assembly according to the present invention will be described in detail.

Referring to FIG. 2, an electrode assembly 100 according to an embodiment of the present invention includes a positive electrode 110, a negative electrode 120, and a separator 130 interposed between the positive electrode 110 and the negative electrode 120.

On the other hand, FIG. 2 shows only a lamination structure near the end (A) of the electrode assembly in the entire electrode assembly. At this time, in the present invention, the end (A) of the electrode assembly corresponds to the outermost edge portion of the electrode assembly and means an end portion of a layer which is protruded toward the outermost side among the positive electrode, the negative electrode and the separator. Referring to FIG. 2, among the separator, the positive electrode and the negative electrode, the separator or the negative electrode protrudes to the outermost side. Hence, the end of the electrode assembly corresponds to the end of the separator or the end of the negative electrode.

Further, referring to FIG. 2, the positive electrode 110 has a structure that a positive electrode active material layer 112 is formed as a positive electrode slurry containing a positive electrode active material is applied on a positive electrode current collector 111. At this time, the positive electrode active material layer 112 may be formed on both surfaces of the positive electrode current collector 111. Further, in the electrode assembly according to the present invention, the positive electrode 110 has a structure that a non-coated part has not been formed at the edge of the positive electrode 110 as a free-edge form. In this case, the non-coated part (not shown) of the positive electrode has been formed on the central portion of the positive electrode, and the positive electrode tab (not shown) may be formed on the non-coated part. One end of the positive electrode tab may be attached and fixed on the non-coated part, and the other end of the positive electrode tab may be protruded from the electrode assembly. The details about the materials constituting the positive electrode current collector and the positive electrode active material are known to those of ordinary skill in the art, so that the detailed description thereof are omitted here.

Further, the separator 130 electrically separates the positive electrode 110 from the negative electrode 120 and may be formed of a material having uniform micropores through which lithium ions may be conducted. As the separator, for example, a multilayer film, which is made of polyethylene and polypropylene having microporosity, or a combination thereof, or a polymer film for a gel-type polymer electrolyte or a solid polymer electrolyte such as polyvinylidene fluoride, polyethylene oxide, polyacrylonitrile, or polyvinylidene fluoride hexafluoropropylene copolymer may be used, and other details are well known to one of ordinary skill in the art, and thus the detailed description thereof is omitted here.

A negative electrode 120 has a structure that a negative electrode active material layer 122 is formed as a negative electrode slurry containing a negative electrode active material is applied on a negative electrode current collector 121. A non-coated part 125, where a negative electrode active material layer has not been formed, is formed at the edge of the negative electrode 120.

A disconnection preventing layer 140 is formed on one surface of the non-coated part 125. As described above, the disconnection preventing layer 140 is for electric connection of the negative electrode current collector 121 at the time of a disconnection of the negative electrode current collector 121.

The disconnection preventing layer 140 is formed as the negative electrode current collector 121, which is extended toward the external side of the non-coated part 125, is horizontally bent. At this time, in order to form the disconnection preventing layer 140, the length of the negative electrode current collector 121, which is extended toward the external side of the non-coated part 125, may be the same as the length of the desired disconnection preventing layer 140. In the present specification, the length of the negative electrode current collector, etc. is measured based on the direction in which the negative electrode current collector, etc. is extended, and this direction is the same direction in which the electrode assembly is wound when using a jelly-roll shape by winding the electrode assembly.

Namely, in the electrode assembly 100 according to the present invention, the current collector constituting the non-coated part 125 of the negative electrode may be formed as a structure of two layers. At this time, the disconnection preventing layer 140 may be integrated with the negative electrode current collector 121 by forming the disconnection preventing layer 140 by horizontally bending the negative electrode current collector 121. As such, the disconnection preventing layer 140 may be prevented from being separated from the non-coated part 125 of the negative electrode current collector 121.

Further, it is possible to omit the process of arranging the non-coated part 125 and the disconnection preventing layer 140 to attach the disconnection preventing layer 140 on the non-coated part 125 and attach both ends of the disconnection preventing layer 140 on the non-coated part 125 by forming the disconnection preventing layer 140 through horizontally bending the negative electrode current collector 121. As such, the productivity and efficiency of the process may be improved.

A negative electrode tab 126 is formed on the other surface of the non-coated part 125 where the disconnection preventing layer 140 has been formed thereon. One end of the negative electrode tab 126 may be attached and fixed on the non-coated part 125, and the other end of the positive electrode tab may be protruded from the electrode assembly 100. The negative electrode tab 126 may be attached and fixed, for example, on the non-coated part 125 formed on the negative electrode current collector 121 by welding.

Further, referring to FIG. 2, a welded portion 141 for connecting the disconnection preventing layer 140 with the non-coated part 125 is formed at the opposite end of the horizontally bent portion. As such, a horizontally bent portion (B) is formed at one end of the disconnection preventing layer 140, a welded portion 141 is formed at the opposite end thereof, and the disconnection preventing layer 140 is coupled with the negative electrode current collector 121 by the horizontally bent portion (B) and the welded portion 141.

Further, the disconnection preventing layer 140 may secure electric connectivity by the horizontally bent portion (B) and the welded portion 141.

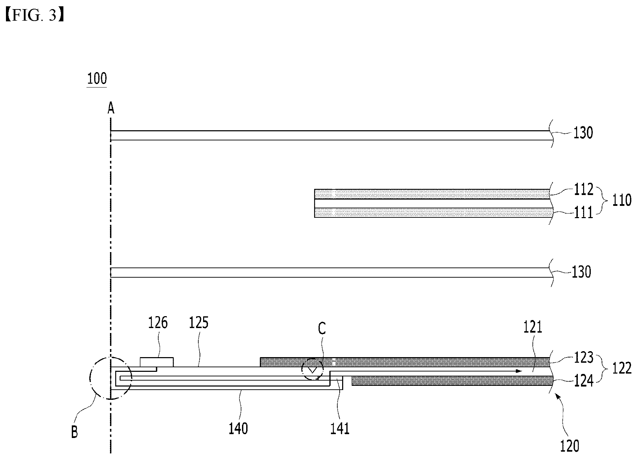

FIG. 3 is a cross-sectional view illustrating a state in which a disconnection has occurred in an electrode assembly according to an embodiment of the present invention.

Referring to FIG. 3, as the charge/discharge is repeated, the volume expansion and shrinkage of the positive electrode 110 are repeated. As such, fatigue is accumulated at the portion facing the end of the positive electrode 110 in the negative electrode 120 due to the stress by the volume change of the positive electrode. When such a phenomenon is repeated, a disconnection due to a crack occurs at the negative electrode current collector 121 as shown in FIG. 3. However, the electrode assembly 100 according to the present invention has a disconnection preventing layer 140 which is electrically connected to the negative electrode current collector 121 by the horizontally bent portion (B) and the welded portion 141 on one surface of the non-coated part 125 of the negative electrode 120. As such, it is possible to secure a conductive path for bypassing a portion (C) disconnected by a crack. In this case, the current of from the negative electrode tab 125 to the central portion of the negative electrode 120 flows in the order of negative electrode tab 126 - non-coated part 125 - horizontally bent portion (B) - disconnection preventing layer 140 - welded portion 141 - negative electrode current collector 121 as shown in FIG. 3. Namely, even if a direct current flow through the negative electrode current collector 121 is blocked due to a crack, a bypass through the disconnection preventing layer 140 is possible.

Further, when the volume of the positive electrode 110 increases, the portion, to which the largest stress is applied in the negative electrode current collector 121, is a portion (C) facing the end of the positive electrode as described above. Namely, in the electrode assembly according to the present invention, the negative electrode active material layer 122 and the disconnection preventing layer 140 may be formed in a predetermined form in order to secure electric connection when a disconnection occurs in the portion (C).

For example, the negative electrode active material layer 122 according to the present invention may be formed on both surfaces of the negative electrode current collector 121. Specifically, the negative electrode active material layer 122 includes a first negative electrode active material layer 123 facing the positive electrode 110 having a separator 130 therebetween, and a second negative electrode active material layer 124 formed on an opposite surface of a surface where the first negative electrode active material layer 123 is formed.

At this time, a length of the first negative electrode active material layer 123 is greater than that of the second negative electrode active material layer 122. As such, referring to FIGS. 2 and 3, the distance (d₁) between the end of the first negative electrode active material layer 123 and the end (A) of the electrode assembly 100 is smaller than the distance (d₂) between the end of the second negative electrode active material layer 124 and the end of the electrode assembly 100.

Further, in the electrode assembly 100, the end of the positive electrode active material layer 112 is positioned between the end of the first negative electrode active material layer 123 and the end of the second negative electrode active material layer 124. Specifically, referring to FIGS. 2 and 3, the distance (d₁) between the end of the first negative electrode active material layer 123 and the end (A) of the electrode assembly 100 is smaller than the distance (d₃) between the end of the positive electrode active material layer 112 and the end (A) of the electrode assembly, and the distance (d₂) between the end of the second negative electrode active material layer 124 and the end (A) of the electrode assembly is greater than the distance (d₃) between the end of the positive electrode active material layer 112 and the end (A) of the electrode assembly. Through this, the disconnection preventing layer 140 may be formed at the portion (C) where a crack is generated, which will be described later. Further, when the positive electrode has a free-edge structure where a non-coated part has not been formed at the edge as shown in FIGS. 2 and 3, the end of the positive electrode active material layer is at the same location as that of the end of the positive electrode current collector and the end of the positive electrode.

Specifically, the disconnection preventing layer 140 is formed on a surface where the second negative electrode active material layer 124 is formed, and the disconnection preventing layer 140 is spaced apart from the second negative electrode active material layer 124 by a predetermined distance. Herein, the disconnection preventing layer 140 may be positioned to be adjacent to the second negative electrode active material layer 124, depending on the electrode. As such, a form, in which the disconnection preventing layer 140 covers the portion (C) where a crack is generated, is made.

At this time, referring to FIGS. 2 and 3, the distance (d₄) between the welded portion 141 and the end (A) of the electrode assembly 100 is greater than the distance (d₃) between the end of the positive electrode active material layer 112 and the end (A) of the electrode assembly. As such, by allowing a portion having a high possibility of disconnection by a crack (a portion adjacent to the end of the positive electrode active material layer, corresponding to C) to be positioned between the welded portion 141 and the horizontally bent portion (B), when a disconnection by a crack actually occurs at the portion, electric connection through the disconnection preventing layer 140 is possible.

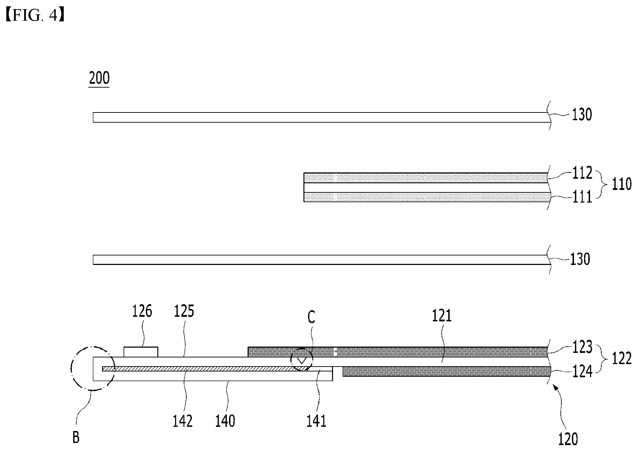

FIG. 4 is a cross-sectional view illustrating a laminated structure of an electrode assembly according to another embodiment of the present invention.

Referring to FIG. 4, the electrode assembly 200 according to the present invention may further include a bonding portion 142 formed between the non-coated part 125 and the disconnection preventing layer 140.

In the electrode assembly 200 according to the present invention, since the disconnection preventing layer 140 is formed by horizontally bending the extended negative electrode current collector 121, the disconnection preventing layer 140 is not in tight contact with the negative electrode current collector 121, and gaps at regular intervals may be formed between the disconnection preventing layer 140 and the negative electrode current collector 121. Further, in the electrode assembly 200 according to the present invention, the disconnection preventing layer 140 and the negative electrode current collector 121 are coupled by the horizontally bent portion (B) and the welded portion 141. Herein, stress, which is externally applied for the welded portion 141, may be concentrated, and in the case that the welded portion 141 is broken for a certain reason, if a disconnection occurs, electric connection between the disconnection preventing layer 140 and the negative electrode current collector 121 may be blocked. According to the electrode assembly 200 of the present invention, it is possible to stably fix the portion between the negative electrode current collector 121 and the disconnection preventing layer 140 by further forming a bonding portion 142 at the gap other than the welded portion 141.

The type of the bonding portion 142 is not particularly limited as long as the negative electrode current collector 121 may be coupled with the disconnection preventing layer 140. For example, the bonding portion 142 may be applied at a portion between the negative electrode current collector 121 and the disconnection preventing layer 140 in the form of an adhesive. Further, the bonding portion 142 may have a form of a double-sided tape where an adhesive has been applied on both surfaces. Further, the bonding portion 142 may be formed through a welding between the disconnection preventing layer 140 and the negative electrode current collector 121. At this time, when the bonding portion 142 is formed by a welding, an additional conductive path between the disconnection preventing layer 140 and the negative electrode current collector 121 may be secured. Further, even when the bonding portion 142 is in the form of a double-sided tape or adhesive, a conductive path between the disconnection preventing layer 140 and the negative electrode current collector 121 may be secured by using one having conductivity.

The form, in which the bonding portion 142 is formed, is not particularly limited, and the bonding portion 142 may be formed at the whole or part of the space between the horizontally bent portion (B) and the welded portion 141. For example, a bonding portion may be formed at the whole or part of the space between the horizontally bent portion (B) and the welded portion 141 as shown in FIG. 4. Further, when the bonding portion 142 is formed by welding, a plurality of bonding portions 142 may be formed by welding a portion between the horizontally bent portion (B) and the welded portion 141 at regular intervals. Namely, the bonding portion 142 is formed at a space between the disconnection preventing layer 140 and the negative electrode current collector 121 and a space between the horizontally bent portion (B) and the welded portion 141.

Meanwhile, the positive electrode 110, the negative electrode 120, and the separator 130 may be wound in a j elly-roll shape after being laminated. At this time, the disconnection preventing layer 140 of the negative electrode 120 is positioned at the outermost portion of the jelly-roll, which will be described later.

In addition, the present invention provides a secondary battery including the above described electrode assembly.

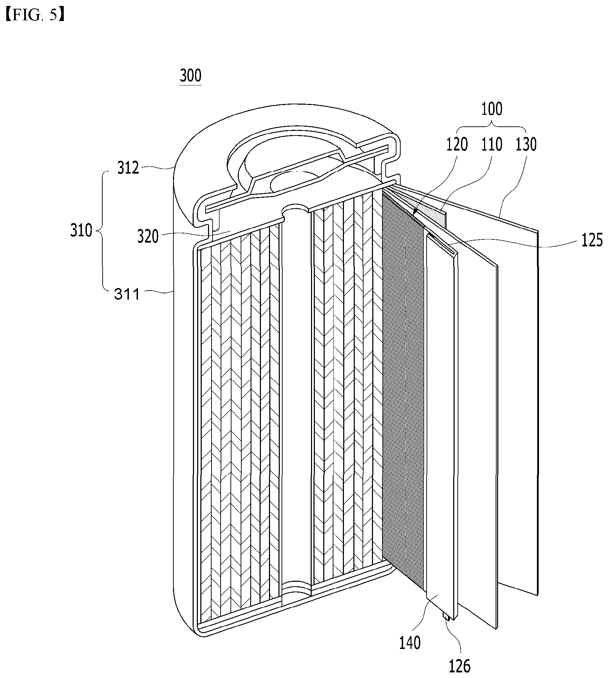

FIG. 5 is a schematic diagram illustrating a structure of a secondary battery including an electrode assembly according to an embodiment of the present invention.

Referring to FIG. 5, in the secondary battery 300, a battery case 310, where an electrode assembly 100 is accommodated, may include a cylindrical can 311 and a cap assembly 312 which covers the upper portion of the cylindrical can 311. The cylindrical can 311 may be made of metal, preferably made of stainless steel. In addition, the cylindrical can 311 may include a receiving unit in which the electrode assembly 100 may be accommodated, and the upper end part may be open.

The electrode assembly 100 is wound and is then formed in a jelly-roll form, which is then accommodated in a receiving portion of the cylindrical can. Thereafter, an electrolyte solution is injected into the receiving portion so that the electrode assembly 100 may be completely immersed in the cylindrical can 311, and the cap assembly 312 is mounted on the open top end of the cylindrical can 311.

The electrode assembly 100 has a structure in which a positive electrode 110, a separator 130, and a negative electrode 120 are sequentially stacked and wound in a round shape, and a cylindrical center pin (not shown) may be inserted into the center of the electrode assembly 100. The center pin is generally made of a metal material to impart a predetermined strength, and has a hollow cylindrical structure in which a plate is rounded.

An insulating plate 320 is mounted on the upper surface of the electrode assembly 100 to prevent contact with the electrode tab, thereby preventing a short circuit due to contact between the electrode assembly 100 and the electrode tab.

Further, the in the electrode assembly 100, the positive electrode 110 has a structure that a positive electrode active material layer is formed on both surfaces of the positive electrode current collector. Further, in the electrode assembly, the positive electrode has a structure that a non-coated part has not been formed at the edge of the positive electrode as a free-edge form. **In** this case, the non-coated part (not shown) of the positive electrode has been formed on the central portion of the positive electrode, and the positive electrode tab (not shown) may be formed on the non-coated part. The positive electrode tab protrudes in one direction based on a direction parallel to the winding central axis of the electrode assembly. For example, the positive electrode tab may protrude toward the upper direction of the electrode assembly to thereby be connected to the cap assembly.

Further, in the case of the negative electrode 120, a non-coated part 125 is formed at the edge portion, and a negative electrode tab 126 is formed at the non-coated part 125. The negative electrode tab 126 may protrude in the other direction for the protruding direction of the positive electrode tab based on a direction parallel to the winding central axis. For example, the negative electrode tab 126 may protrude in a lower direction of the electrode assembly 100, to thereby be connected to the inner bottom surface of the cylindrical can 311.

Further, a disconnection preventing layer 140 is formed on one surface of the non-coated part, and the disconnection preventing layer 140 may be formed as the negative electrode current collector, which is extended toward the external side of the non-coated part, is horizontally bent. Details of the disconnection preventing layer are the same as described above. According to a secondary battery 300 of the present invention, even if a disconnection by a crack occurs at a negative electrode current collector due to volume expansion of a positive electrode 110, it is possible to prevent performance deterioration of the battery by maintaining electric connection within a negative electrode current collector through a disconnection preventing layer 140.

The present invention also provides a method for manufacturing an electrode assembly as described above.

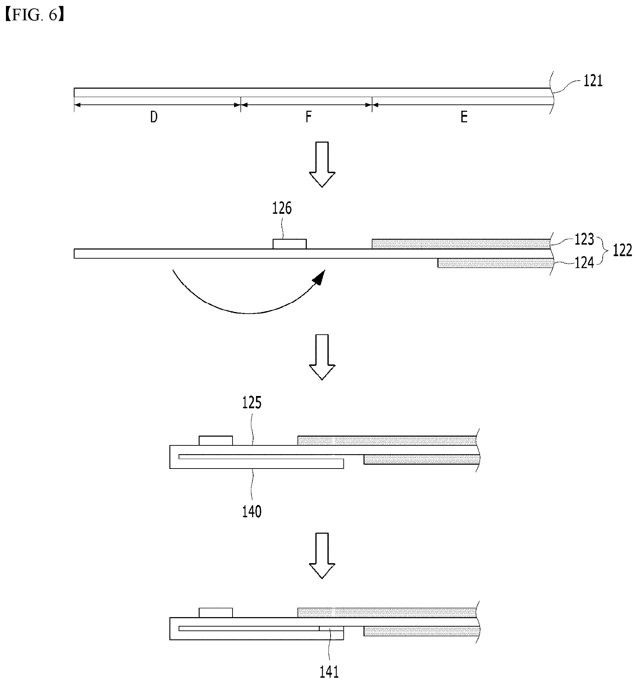

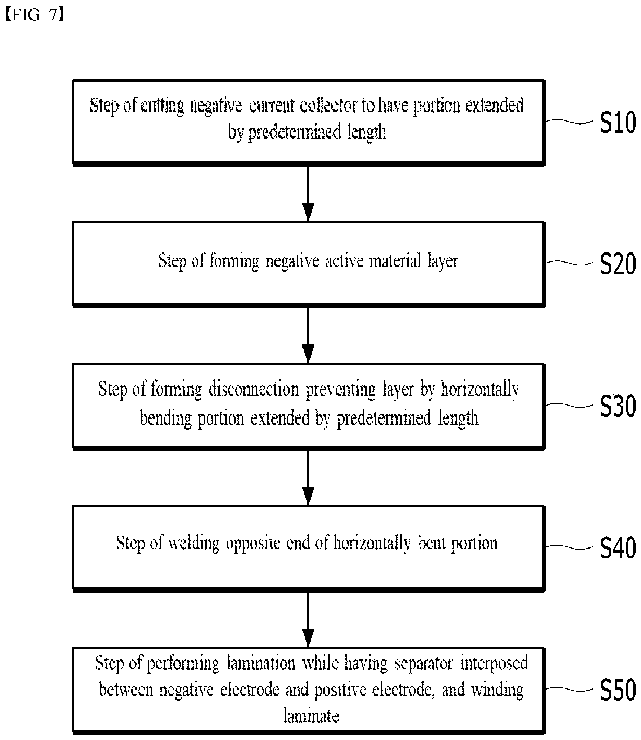

FIG. 6 is a flowchart illustrating the order of the method of manufacturing an electrode assembly according to the present invention, and FIG. 7 is a schematic diagram showing a manufacturing process of a negative electrode in a method for manufacturing an electrode assembly according to the present invention.

Referring to FIGS. 6 and 7 together with FIG. 2, in a method of manufacturing an electrode assembly according to the present invention, first, a positive electrode 110, a negative electrode 120, and a separator 130, which are to be manufactured as an electrode assembly 100, are prepared. At this time, the positive electrode 110 and the separator 130 are as described above.

Further, the negative electrode current collector 121 goes through a process for forming a disconnection preventing layer 140. First of all, the negative electrode current collector 121 is cut long to have a portion (D) which is extended by a predetermined length (S10). Namely, the negative electrode current collector 121 is cut to include a portion (E) where the negative electrode active material layer 122 is to be formed, a portion (F) where the non-coated part 125 is to be formed, and a portion (D) which is extended at the external side of the non-coated part 125 by a predetermined length.

When the negative electrode current collector 121 is prepared, a negative electrode active material layer 122 is formed by applying a negative electrode slurry containing a negative electrode active material on the negative electrode current collector 121. At this time, in the negative electrode current collector 121, a negative electrode active material layer is formed at a portion except a portion (D) which is extended by the predetermined length and a portion (F) where a non-coated part 125 is to be formed (S20). Herein, the length of the second negative electrode active material layer may be set to be different from that of the first negative electrode active material layer, which will be described later. Further, a negative electrode tab 126 may be formed on one surface of the non-coated part.

Specifically, as shown in FIGS. 2 and 7, the negative electrode slurry is applied on both surfaces of the negative electrode current collector 121, thereby forming a first negative electrode active material layer 123 and a second negative electrode active material layer 124, respectively. At this time, referring to FIG. 2, the negative electrode slurry may be applied so that the distance (d₁) between the end of the first negative electrode active material layer 123 and the end (A) of the electrode assembly 100 may be smaller than the distance (d₃) between the end of the positive electrode active material layer 112 and the end (A) of the electrode assembly, and the distance (d₂) between the end of the second negative electrode active material layer 124 and the end (A) of the electrode assembly may be greater than the distance (d₃) between the end of the positive electrode active material layer 112 and the end (A) of the electrode assembly.

When a negative electrode active material layer is formed, a portion (D), which has been extended by the predetermined length, may be horizontally bent to thereby form a disconnection preventing layer 140 (S30). Further, the disconnection preventing layer and the current collector are fixed by welding the opposite end of the horizontally bent portion (B) (S40).

At this time, as shown in FIGS. 2 and 7, the disconnection preventing layer 140 may be spaced apart from the second negative electrode active material layer 124 by a predetermined distance, and the distance (d₄) between the welded portion 131 and the end (A) of the electrode assembly 100 may be adjusted to be greater than the distance (d₃) between the end of the positive electrode active material layer 112 and the end (A) of the electrode assembly.

A bonding portion 142 may be further formed between the non-coated part 125 and the disconnection preventing layer 140. The method of forming the bonding portion 142 is as described above.

When the manufacturing of the negative electrode is completed, a separator is interposed between the negative electrode and a positive electrode, which is then wound to thereby manufacture an electrode assembly of a jelly-roll type (S50). The jelly-roll type electrode assembly is accommodated in a battery case of a cylindrical can shape, to thereby be manufactured as a secondary battery.

Likewise, according to a method of manufacturing an electrode assembly of the present invention, even if a disconnection by a crack occurs at a negative electrode current collector due to volume expansion of a positive electrode, it is possible to prevent performance deterioration of a battery by maintaining electric connection within a negative electrode through a disconnection preventing layer.

Further, by forming a disconnection preventing layer through horizontally bending a negative electrode current collector, it is possible to omit a process of arranging a non-coated part and the disconnection preventing layer to attach the disconnection preventing layer on the non-coated part, and attaching both ends of the disconnection preventing layer on the non-coated part. As such, the productivity and efficiency of the process may be improved.

On the other hand, in this specification, terms indicating directions such as up, down, left, right, before, and after are used, but it is obvious that these terms are for convenience of description only and may change depending on the location of the object or the location of the observer.

### [Description of reference numerals]

10, 100, 200: electrode assembly
1, 110: positive electrode
2, 120: negative electrode
3, 130: separator
111: positive electrode current collector
112: positive electrode active material layer
121: negative electrode current collector
122: negative electrode active material layer
123: first negative electrode active material layer
124: second negative electrode active material layer
125: non-coated part
126: negative electrode tab
140: disconnection preventing layer
141: welded portion
142: bonding portion
300: secondary battery
310: battery case
311: can
312: cap assembly
320: insulating plate

## Claims

1. An electrode assembly (100) comprising: a positive electrode (110);
a negative electrode (120); and
a separator (130) interposed between the positive electrode and the negative electrode,
wherein the positive electrode includes a positive electrode active material layer (112) formed on a positive electrode current collector (111), and the negative electrode includes a negative electrode active material layer (122) formed on a negative electrode current collector (121),
wherein a non-coated part (125) is formed at an edge of the negative electrode current collector (121), and
wherein a disconnection preventing layer (140) is formed as the negative electrode current collector, which is extended to an external side of the non-coated part, is horizontally bent,
wherein a welded portion (141) for connecting the disconnection preventing layer (140) with the non-coated part (125) is formed on an opposite end of the horizontally bent portion (B).

2. The electrode assembly of claim 1, wherein a negative electrode tab is formed on another surface of the non-coated part where the disconnection preventing layer is formed thereon.

3. The electrode assembly of claim 1, wherein the negative electrode active material layer includes a first negative electrode active material layer (123) facing the positive electrode having a separator therebetween, and a second negative electrode active material layer (124) formed on an opposite surface of a surface where the first negative electrode active material layer is formed.

4. The electrode assembly of claim 3, wherein a length of the first negative electrode active material layer (123) is greater than that of the second negative electrode active material layer (124).

5. The electrode assembly of claim 4, wherein a distance between an end of the first negative electrode active material layer and an end of the electrode assembly is smaller than a distance between an end of the positive electrode active material layer and the end of the electrode assembly, and
wherein a distance between an end of the second negative electrode active material layer and the end of the electrode assembly is greater than a distance between the end of the positive electrode active material layer and the end of the electrode assembly.

6. The electrode assembly of claim 5, wherein the disconnection preventing layer is formed on a surface where the second negative electrode active material layer is formed, and
wherein the disconnection preventing layer is spaced apart from the second negative electrode active material layer by a predetermined distance.

7. The electrode assembly of claim 6, wherein a distance between the welded portion and the end of the electrode assembly is greater than the end of the positive electrode active material layer and the end of the electrode assembly.

8. The electrode assembly of claim 1, further comprising: a bonding portion formed between the non-coated part and the disconnection preventing layer.

9. The electrode assembly of claim 1, wherein the positive electrode, the negative electrode, and the separator are wound in a j elly-roll shape after being laminated.

10. A secondary battery comprising the electrode assembly according to claim 1.

11. A method of manufacturing the electrode assembly according to claim 1, the method comprising:
a step of cutting a negative electrode current collector to have a portion which is extended by a predetermined length;
a step of forming a negative electrode active material layer (122) on a portion except the portion extended by a predetermined length and the non-coated part;
a step of forming a disconnection preventing layer (140) by horizontally bending the portion extended by the predetermined length; and
a step of fixing the disconnection preventing layer and the current collector by welding an opposite end of the horizontally bent portion,
wherein a welded portion (141) for connecting the disconnection preventing layer (140) with the non-coated part (125) is formed on an opposite end of a horizontally bent portion (B).

## Patentansprüche

1. Elektrodenanordnung (100) umfassend: eine positive Elektrode (110);
eine negative Elektrode (120); und
einen Separator (130), der zwischen der positiven Elektrode und der negativen Elektrode eingefügt ist,
wobei die positive Elektrode eine aktive Materialschicht der positiven Elektrode (112) einschließt, die auf einem Stromkollektor der positiven Elektrode (111) ausgebildet ist, und die negative Elektrode eine aktive Materialschicht der negativen Elektrode (122) einschließt, die auf einem Stromkollektor der negativen Elektrode (121) ausgebildet ist,
wobei ein unbeschichteter Teil (125) an einem Rand des Stromkollektors der negativen Elektrode (121) ausgebildet ist, und
wobei eine Trennverhinderungsschicht (140) bei einer horizontalen Biegung des Stromkollektors der negativen Elektrode, der auf einer äußeren Seite des unbeschichteten Teils verlängert ist, ausgebildet ist,
wobei ein Schweißabschnitt (141) zum Verbinden der Trennverhinderungsschicht (140) mit dem unbeschichteten Teil (125) an einem gegenüberliegenden Ende des horizontal gebogenen Abschnitts (B) ausgebildet ist.

2. Elektrodenanordnung nach Anspruch 1, wobei eine Lasche der negativen Elektrode auf einer anderen Oberfläche des unbeschichteten Teils ausgebildet ist, auf dem die Trennverhinderungsschicht ausgebildet ist.

3. Elektrodenanordnung nach Anspruch 1, wobei die aktive Materialschicht der negativen Elektrode eine erste aktive Materialschicht der negativen Elektrode (123) einschließt, die der positiven Elektrode gegenüberliegt und dazwischen einen Separator aufweist, und eine zweite aktive Materialschicht der negativen Elektrode (124), die auf einer gegenüberliegenden Oberfläche einer Oberfläche ausgebildet ist, auf der die erste aktive Materialschicht der negativen Elektrode ausgebildet ist.

4. Elektrodenanordnung nach Anspruch 3, wobei eine Länge der ersten aktiven Materialschicht der negativen Elektrode (123) größer ist als die der zweiten aktiven Materialschicht der negativen Elektrode (124).

5. Elektrodenanordnung nach Anspruch 4, wobei ein Abstand zwischen einem Ende der ersten aktiven Materialschicht der negativen Elektrode und einem Ende der Elektrodenanordnung kleiner ist als ein Abstand zwischen einem Ende der aktiven Materialschicht der positiven Elektrode und dem Ende der Elektrodenanordnung, und
wobei ein Abstand zwischen einem Ende der zweiten aktiven Materialschicht der negativen Elektrode und dem Ende der Elektrodenanordnung größer ist als ein Abstand zwischen dem Ende der aktiven Materialschicht der positiven Elektrode und dem Ende der Elektrodenanordnung.

6. Elektrodenanordnung nach Anspruch 5, wobei die Trennverhinderungsschicht auf einer Oberfläche ausgebildet ist, auf der die zweite aktive Materialschicht der negativen Elektrode ausgebildet ist, und
wobei die Trennverhinderungsschicht in einem vorbestimmten Abstand von der zweiten aktiven Materialschicht der negativen Elektrode beabstandet ist.

7. Elektrodenanordnung nach Anspruch 6, wobei ein Abstand zwischen dem Schweißabschnitt und dem Ende der Elektrodenanordnung größer ist als das Ende der aktiven Materialschicht der positiven Elektrode und das Ende der Elektrodenanordnung.

8. Elektrodenanordnung nach Anspruch 1, weiter umfassend: einen Verbindungsabschnitt, der zwischen dem unbeschichteten Teil und der Trennverhinderungsschicht ausgebildet ist.

9. Elektrodenanordnung nach Anspruch 1, wobei die positive Elektrode, die negative Elektrode und der Separator in einer Wickelstruktur gewickelt sind, nachdem sie laminiert wurden.

10. Sekundärbatterie, die die Elektrodenanordnung nach Anspruch 1 umfasst.

11. Verfahren zur Herstellung der Elektrodenanordnung nach Anspruch 1, wobei das Verfahren umfasst:
einen Schritt des Schneidens eines Stromkollektors der negativen Elektrode, um einen Abschnitt aufzuweisen, der um eine vorbestimmte Länge verlängert ist;
einen Schritt des Ausbildens einer aktiven Materialschicht der negativen Elektrode (122) auf einem Abschnitt, außer dem Abschnitt, der um eine vorbestimmte Länge verlängert ist, und dem unbeschichteten Teil;
einen Schritt des Ausbildens einer Trennverhinderungsschicht (140) durch horizontales Biegen des Abschnitts, der um die vorbestimmte Länge verlängert ist; und
einen Schritt des Fixierens der Trennverhinderungsschicht und des Stromkollektors durch Schweißen eines gegenüberliegenden Endes des horizontal gebogenen Abschnitts,
wobei ein Schweißabschnitt (141) zum Verbinden der Trennverhinderungsschicht (140) mit dem unbeschichteten Teil (125) an einem gegenüberliegenden Ende eines horizontal gebogenen Abschnitts (B) ausgebildet ist.

## Revendications

1. Ensemble d'électrodes (100) comprenant : une électrode positive (110) ;
une électrode négative (120) ; et
un séparateur (130) interposé entre l'électrode positive et l'électrode négative,
dans lequel l'électrode positive inclut une couche de matériau actif d'électrode positive (112) formée sur un collecteur de courant d'électrode positive (111), et l'électrode négative inclut une couche de matériau actif d'électrode négative (122) formée sur un collecteur de courant d'électrode négative (121),
dans lequel une partie non revêtue (125) est formée au niveau d'un bord du collecteur de courant d'électrode négative (121), et
dans lequel une couche d'empêchement de déconnexion (140) est formée comme collecteur de courant d'électrode négative, qui est étendue vers un côté externe de la partie non revêtue, est pliée horizontalement,
dans lequel une partie soudée (141) pour connecter la couche d'empêchement de déconnexion (140) avec la partie non revêtue (125) est formée sur une extrémité opposée de la partie pliée horizontalement (B).

2. Ensemble d'électrodes selon la revendication 1, dans lequel une languette d'électrode négative est formée sur une autre surface de la partie non revêtue où la couche d'empêchement de déconnexion est formée sur celle-ci.

3. Ensemble d'électrodes selon la revendication 1, dans lequel la couche de matériau actif d'électrode négative inclut une première couche de matériau actif d'électrode négative (123) faisant face à l'électrode positive présentant un séparateur entre elles, et une seconde couche de matériau actif d'électrode négative (124) formée sur une surface opposée à une surface où la première couche de matériau actif d'électrode négative est formée.

4. Ensemble d'électrodes selon la revendication 3, dans lequel une longueur de la première couche de matériau actif d'électrode négative (123) est supérieure à celle de la seconde couche de matériau actif d'électrode négative (124).

5. Ensemble d'électrodes selon la revendication 4, dans lequel une distance entre une extrémité de la première couche de matériau actif d'électrode négative et une extrémité de l'ensemble d'électrodes est inférieure à une distance entre une extrémité de la couche de matériau actif d'électrode positive et l'extrémité de l'ensemble d'électrodes, et
dans lequel une distance entre une extrémité de la seconde couche de matériau actif d'électrode négative et l'extrémité de l'ensemble d'électrodes est supérieure à une distance entre l'extrémité de la couche de matériau actif d'électrode positive et l'extrémité de l'ensemble d'électrodes.

6. Ensemble d'électrodes selon la revendication 5, dans lequel la couche d'empêchement de déconnexion est formée sur une surface où la seconde couche de matériau actif d'électrode négative est formée, et
dans lequel la couche d'empêchement de déconnexion est espacée de la seconde couche de matériau actif d'électrode négative par une distance prédéterminée.

7. Ensemble d'électrodes selon la revendication 6, dans lequel une distance entre la partie soudée et l'extrémité de l'ensemble d'électrodes est supérieure à l'extrémité de la couche de matériau actif d'électrode positive et l'extrémité de l'ensemble d'électrodes.

8. Ensemble d'électrodes selon la revendication 1, comprenant en outre : une partie de liaison formée entre la partie non revêtue et la partie d'empêchement de déconnexion.

9. Ensemble d'électrodes selon la revendication 1, dans lequel l'électrode positive, l'électrode négative et le séparateur sont enroulés en forme de rouleau de gelée après avoir été laminés.

10. Batterie secondaire comprenant l'ensemble d'électrodes selon la revendication 1.

11. Procédé de fabrication de l'ensemble d'électrodes selon la revendication 1, le procédé comprenant :
une étape de découpe d'un collecteur de courant d'électrode négative pour présenter une partie qui est étendue d'une longueur prédéterminée ;
une étape de formation d'une couche de matériau actif d'électrode négative (122) sur une partie sauf la partie étendue d'une longueur prédéterminée et la partie non revêtue ;
une étape de formation d'une couche d'empêchement de déconnexion (140) en pliant horizontalement la partie étendue de la longueur prédéterminée ; et
une étape de fixation de la couche d'empêchement de déconnexion et du collecteur de courant en soudant une extrémité opposée de la partie pliée horizontalement,
dans lequel une partie soudée (141) pour connecter la couche d'empêchement de déconnexion (140) avec la partie non revêtue (125) est formée sur une extrémité opposée d'une partie pliée horizontalement (B).
